# EUROPEAN PATENT APPLICATION

(11) **EP 4 383 799 A1**
(43) Date of publication of application: **12.06.2024**
(21) Application number: 22851948.4
(22) Date of filing: 25.07.2022
(51) Int. Cl.: H04W 24/10

(54) **METHOD AND APPARATUS FOR REPORTING CSI REPORT**

(30) Priority: 06.08.2021 CN 202110904272
(71) Applicant: Huawei Technologies Co., Ltd., Shenzhen, Guangdong 518129 (CN)
(72) Inventor: ZHANG, Yongping, Shenzhen, Guangdong 518129 (CN); ZHANG, Min, Shenzhen, Guangdong 518129 (CN); YU, Zheng, Shenzhen, Guangdong 518129 (CN)
(74) Representative: Roth, Sebastian
(86) International application number: PCT/CN2022/107661
(87) International publication number: WO 2023/011234

(57) **Abstract**

Disclosed are a method and an apparatus for reporting a CSI report. The method includes: A terminal device receives first configuration information and second configuration information, where the first configuration information is associated with reference signal resource configuration information, and the reference signal resource configuration information is used to configure a reference signal resource set and an interference measurement resource set. The reference signal resource set includes K reference signal resources, and the interference measurement resource set includes X interference measurement resources. The terminal device determines N channel measurement resource pairs, obtains a CSI report, and sends the CSI report to a network device. X meets X=N+K, the second configuration information indicates M reference signal resources in the K reference signal resources, and M is a positive integer less than or equal to K. According to the foregoing method, interference measurement resource sets associated with a same reference signal resource set may be the same even if values of M are different, thereby effectively reducing resource configuration complexity and storage burden of the terminal device.

## Description

### CROSS-REFERENCE TO RELATED APPLICATIONS

This application claims priority to Chinese Patent Application No. 202110904272.4, filed with the China National Intellectual Property Administration on August 6, 2021 and entitled "METHOD AND APPARATUS FOR REPORTING CSI REPORT", which is incorporated herein by reference in its entirety.

### TECHNICAL FIELD

Embodiments of this application relate to the wireless communication field, and in particular, to a method and an apparatus for reporting a CSI report.

### BACKGROUND

Currently, non-coherent joint transmission (non-coherent joint transmission, NCJT) may implement that a maximum of two transmission reception points (transmission reception points, TRPs) simultaneously provide data transmission services for a same terminal device.

To support CSI measurement based on an NCJT channel state information (channel state information, CSI) measurement hypothesis, a network device may configure, for a terminal device, a reference signal resource set that includes K reference signal resources. The reference signal resource may be a non-zero power channel state information reference signal (non-Zero power channel state information reference signal, NZP CSI-RS) resource. The network device further configures an interference measurement resource set, and the interference measurement set includes channel state information-interference measurement (Channel state information-interference measurement, CSI-IM) resources.

The network device may further configure N channel measurement resource pairs (channel measurement resource pairs, CMR pairs) in the K reference signal resources, where N is a positive integer, each channel measurement resource pair includes two reference signal resources, and an association relationship exists between a reference signal resource and a TRP. Different reference signal resources are associated with different TRPs. The network device may further configure interference measurement resources respectively associated with the N channel measurement resource pairs. The terminal device may perform CSI calculation, based on the NCJT CSI measurement hypothesis, on the two reference signal resources included in each channel measurement resource pair and an interference measurement resource associated with the channel measurement resource pair. The N channel measurement resource pairs correspond to N NCJT CSI measurement hypotheses.

The network device may further configure, in the K reference signal resources, M (M≤K) reference signal resources and interference measurement resources respectively associated with the M reference signal resources. The terminal device may perform CSI calculation, based on a single TRP CSI measurement hypothesis, on each reference signal resource and an interference measurement resource associated with the reference signal resource. The M reference signal resources correspond to M single TRP measurement hypotheses.

In the foregoing configuration, the network device may configure one reference signal resource set and one interference measurement resource set for the terminal device. A quantity of reference signal resources included in the reference signal resource set is the same as a quantity of interference measurement resources included in the interference measurement resource set. In addition, the reference signal resources in the reference signal resource set correspond to the interference measurement resources in the interference measurement resource set according to a sequence of the reference signal resources in the reference signal resource set and a sequence of the interference measurement resources in the interference measurement resource set.

When the network device configures the M reference signal resources in the K reference signal resources, values of M may be different. Therefore, different values of M cause different quantities of interference measurement resources included in interference measurement resource sets. In other words, for each corresponding value of M, one interference measurement resource set needs to be associated with. Further, interference measurement resource sets need to be separately configured to correspond to different values of M. As a result, configuration parameters increase sharply, and configuration efficiency is low.

### SUMMARY

Embodiments of this application provide a method and an apparatus for reporting a CSI report, to resolve a problem that configuration parameters increase sharply because interference measurement resource sets are separately configured to correspond to different values of M.

According to a first aspect, an embodiment of this application provides a method for reporting a CSI report. The method may be performed by a terminal device or an apparatus configured to implement a function of the terminal device. An example in which the method is performed by the terminal device is used below for description. The method includes: The terminal device receives first configuration information and second configuration information, determines N channel measurement resource pairs, obtains a CSI report, and sends the CSI report to a network device. The first configuration information is associated with reference signal resource configuration information, and the reference signal resource configuration information is used to configure a reference signal resource set and an interference measurement resource set. The reference signal resource set includes K reference signal resources, and the interference measurement resource set includes X interference measurement resources. N is an integer greater than or equal to 1. Each channel measurement resource pair includes P reference signal resources, the P reference signal resources included in each channel measurement resource pair all belong to the reference signal resource set, P is an integer greater than or equal to 2, and K is an integer greater than or equal to P. X meets X=N+K, the second configuration information indicates M reference signal resources in the K reference signal resources, and M is a positive integer less than or equal to K. A first association relationship exists between the X interference measurement resources included in the interference measurement resource set and the K reference signal resources and the N channel measurement resource pairs. Alternatively, a second association relationship exists between M+N interference measurement resources in the X interference measurement resources included in the interference measurement resource set and the M reference signal resources and the N channel measurement resource pairs. An association relationship exists between the CSI report and the M reference signal resources and M interference measurement resources associated with the M reference signal resources, and an association relationship exists between the CSI report and reference signal resources included in the N channel measurement resource pairs and N interference measurement resources associated with the reference signal resources.

According to the foregoing method, under an NCJT CSI measurement hypothesis, how to configure a quantity of interference measurement resources configured in the interference measurement resource set associated with the reference signal resource set and how the interference measurement resources in the interference measurement resource set are associated with the reference signal resources for a single TRP CSI measurement hypothesis and the channel measurement resource pairs for the NCJT CSI measurement hypothesis are resolved. The interference measurement resource set includes the X interference measurement resources, where X=N+K. Therefore, interference measurement resource sets associated with a same reference signal resource set are the same even if values of M are different, thereby effectively reducing resource configuration complexity and storage burden of the terminal device.

In a possible design, the first configuration information is CSI report configuration information, and the CSI report configuration information includes the second configuration information.

In a possible design, the second configuration information includes K bits, and the K bits sequentially correspond to the K reference signal resources.

In the foregoing design, whether each reference signal resource is each of the M reference signal resources in the K reference signal resources can be indicated, and further, a value of M can be determined.

In a possible design, the second configuration information indicates whether the reference signal resources corresponding to the N channel measurement resource pairs are used for CSI measurement based on the single TRP CSI measurement hypothesis.

In the foregoing design, whether the reference signal resources corresponding to the N channel measurement resource pairs are used for CSI measurement based on the single TRP CSI measurement hypothesis can be indicated, and further, the value of M can be determined.

In a possible design, that a first association relationship exists between the X interference measurement resources included in the interference measurement resource set and the K reference signal resources and the N channel measurement resource pairs means that: The first K interference measurement resources in the interference measurement resource set are associated with the K reference signal resources according to a sequence of the K interference resources in the interference measurement resource set and a sequence of the K reference signal resources in the reference signal resource set, and the last N interference measurement resources in the interference measurement resource set are associated with the N channel measurement resource pairs according to a sequence of the N interference resources in the interference measurement resource set and a sequence of the N channel measurement resource pairs in the reference signal resource set; or the first N interference measurement resources in the interference measurement resource set are associated with the N channel measurement resource pairs according to a sequence of the N interference resources in the interference measurement resource set and a sequence of the N channel measurement resource pairs in the reference signal resource set, and the last K interference measurement resources in the interference measurement resource set are associated with the K reference signal resources according to a sequence of the K interference resources in the interference measurement resource set and a sequence of the K reference signal resource pairs in the reference signal resource set.

The first association relationship is used, so that reference signal resources or channel measurement resource pairs associated with a same interference measurement resource are not changed even if the values of M indicated by the second configuration information are different, which facilitates interference measurement accuracy. Especially, when the interference measurement resource is a periodic or semi-persistent resource, the terminal device usually performs time-domain filtering. When the reference signal resources or channel measurement resource pairs associated with the same interference measurement resource remain unchanged, filtering performance is facilitated, and interference estimation accuracy is improved.

In a possible design, that a second association relationship exists between M+N interference measurement resources in the X interference measurement resources included in the interference measurement resource set and the M reference signal resources and the N channel measurement resource pairs means that: The first M interference measurement resources in the interference measurement resource set are associated with the M reference signal resources according to a sequence of the M interference resources in the interference measurement resource set and a sequence of the M reference signal resources in the reference signal resource set, and the last N interference measurement resources in the interference measurement resource set are associated with the N channel measurement resource pairs according to a sequence of the N interference resources in the interference measurement resource set and the sequence of the N channel measurement resource pairs in the reference signal resource set; or the first N interference measurement resources in the interference measurement resource set are associated with the N channel measurement resource pairs according to a sequence of the N interference resources in the interference measurement resource set and the sequence of the N channel measurement resource pairs in the reference signal resource set, and the last M interference measurement resources in the interference measurement resource set are associated with the M channel measurement resources according to a sequence of the M interference resources in the interference measurement resource set and a sequence of the M channel measurement resources in the reference signal resource set.

The second association relationship is used, so that when the second configuration information indicates that the reference signal resources included in the N channel measurement resource pairs are not used for the CSI measurement based on the single TRP CSI measurement hypothesis, the interference measurement resources associated with the M reference signal resources for CSI measurement based on the single TRP CSI measurement hypothesis are continuous. Because CRI needs to have an association relationship with an interference measurement resource, a quantity of bits fed back by the CRI may be reduced. In addition, a same interference measurement resource has an association relationship with a reference signal resource for CSI measurement based on the single TRP measurement hypothesis, or has an association relationship with a reference signal resource for CSI measurement based on the NCJT CSI measurement hypothesis.

In a possible design, the CSI report includes reference signal resource indication information and CSI measurement information. A bit length of the reference signal resource indication information is determined by K and N, or a bit length of the reference signal resource indication information is determined by M and N. The CSI measurement information includes one or more of PMI information, CQI information, RI information, and LI information.

In a possible design, the reference signal resource indication information is first reference signal resource indication information, and the CSI measurement information is first CSI measurement information. An association relationship exists between the first reference signal resource indication information and a first channel measurement resource pair, and the first channel measurement resource pair is one of the N channel measurement resource pairs. An association relationship exists between the first reference signal resource indication information and a first interference measurement resource, and the first interference measurement resource is an interference measurement resource associated with the first channel measurement resource pair. The first CSI measurement information is obtained by performing measurement on the first interference measurement resource and P reference signal resources included in the first channel measurement resource pair.

In the foregoing design, the CSI includes CSI corresponding to one NCJT CSI measurement hypothesis.

In a possible design, the reference signal resource indication information is second reference signal resource indication information, and the CSI measurement information is second CSI measurement information. An association relationship exists between the second reference signal resource indication information and a first reference signal resource, and the first reference signal resource is one of the M reference signal resources. An association relationship exists between the second reference signal resource indication information and a second interference measurement resource, and the second interference measurement resource is an interference measurement resource associated with the first reference signal resource. The second CSI measurement information is obtained by performing measurement on the first reference signal resource and the second interference measurement resource.

In the foregoing design, the CSI includes CSI corresponding to one single TRP CSI measurement hypothesis.

In a possible design, the CSI report includes third reference signal resource indication information and third CSI measurement information. An association relationship exists between the third reference signal resource indication information and a second channel measurement resource pair, and the third channel measurement resource pair is one of the N channel measurement resource pairs. An association relationship exists between the third reference signal resource indication information and a third interference measurement resource, and the third interference measurement resource is an interference measurement resource associated with the second channel measurement resource pair. The third CSI measurement information is obtained by performing measurement on the third interference measurement resource and P reference signal resources included in the second channel measurement resource pair. The CSI report further includes fourth reference signal resource indication information and fourth CSI measurement information. An association relationship exists between the fourth reference signal resource indication information and a second reference signal resource, and the second reference signal resource is one of the M reference signal resources. An association relationship exists between the fourth reference signal resource indication information and a fourth interference measurement resource, and the fourth interference measurement resource is an interference resource associated with the second reference signal resource. The fourth CSI measurement information is obtained by performing measurement on the second reference signal resource and the fourth interference measurement resource.

In the foregoing design, the CSI includes CSI corresponding to one single TRP CSI measurement hypothesis and CSI corresponding to one NCJT CSI measurement hypothesis.

In a possible design, the reference signal resource is an NZP CSI-RS resource, and the interference measurement resource is a CSI-IM resource.

In a possible design, the N channel measurement resource pairs correspond to a non-coherent joint transmission CSI measurement hypothesis, and the M channel measurement resources correspond to the single TRP CSI measurement hypothesis.

According to a second aspect, an embodiment of this application provides a method for reporting a CSI report. The method may be performed by a network or an apparatus configured to implement a function of the network. An example in which the method is performed by the network device is used below for description. The method includes: The network device sends first configuration information and second configuration information to a terminal device, determines N channel measurement resource pairs, separately sends reference signals on K reference signal resources, and receives a CSI report from the terminal device. The first configuration information is associated with reference signal resource configuration information, and the reference signal resource configuration information is used to configure a reference signal resource set and an interference measurement resource set. The reference signal resource set includes the K reference signal resources, and the interference measurement resource set includes X interference measurement resources. N is an integer greater than or equal to 1. Each channel measurement resource pair includes P reference signal resources, the P reference signal resources included in each channel measurement resource pair all belong to the reference signal resource set, P is an integer greater than or equal to 2, and K is an integer greater than or equal to P. X meets X=N+K, the second configuration information indicates M reference signal resources in the K reference signal resources, and M is a positive integer less than or equal to K. A first association relationship exists between the X interference measurement resources included in the interference measurement resource set and the K reference signal resources and the N channel measurement resource pairs. Alternatively, a second association relationship exists between M+N interference measurement resources in the X interference measurement resources included in the interference measurement resource set and the M reference signal resources and the N channel measurement resource pairs. An association relationship exists between the CSI report and the M reference signal resources and M interference measurement resources associated with the M reference signal resources, and an association relationship exists between the CSI report and reference signal resources included in the N channel measurement resource pairs and N interference measurement resources associated with the reference signal resources.

In a possible design, the first configuration information is CSI report configuration information, and the CSI report configuration information includes the second configuration information.

In a possible design, the second configuration information includes K bits, and the K bits sequentially correspond to the K reference signal resources.

In a possible design, the second configuration information indicates whether the reference signal resources corresponding to the N channel measurement resource pairs are used for CSI measurement based on a single TRP CSI measurement hypothesis.

In a possible design, that a first association relationship exists between the X interference measurement resources included in the interference measurement resource set and the K reference signal resources and the N channel measurement resource pairs means that:

The first K interference measurement resources in the interference measurement resource set are associated with the K reference signal resources according to a sequence of the K interference resources in the interference measurement resource set and a sequence of the K reference signal resources in the reference signal resource set, and the last N interference measurement resources in the interference measurement resource set are associated with the N channel measurement resource pairs according to a sequence of the N interference resources in the interference measurement resource set and a sequence of the N channel measurement resource pairs in the reference signal resource set; or
the first N interference measurement resources in the interference measurement resource set are associated with the N channel measurement resource pairs according to a sequence of the N interference resources in the interference measurement resource set and a sequence of the N channel measurement resource pairs in the reference signal resource set, and the last K interference measurement resources in the interference measurement resource set are associated with the K reference signal resources according to a sequence of the K interference resources in the interference measurement resource set and a sequence of the K reference signal resource pairs in the reference signal resource set.

In a possible design, that a second association relationship exists between M+N interference measurement resources in the X interference measurement resources included in the interference measurement resource set and the M reference signal resources and the N channel measurement resource pairs means that:

The first M interference measurement resources in the interference measurement resource set are associated with the M reference signal resources according to a sequence of the M interference resources in the interference measurement resource set and a sequence of the M reference signal resources in the reference signal resource set, and the last N interference measurement resources in the interference measurement resource set are associated with the N channel measurement resource pairs according to a sequence of the N interference resources in the interference measurement resource set and the sequence of the N channel measurement resource pairs in the reference signal resource set; or the first N interference measurement resources in the interference measurement resource set are associated with the N channel measurement resource pairs according to a sequence of the N interference resources in the interference measurement resource set and the sequence of the N channel measurement resource pairs in the reference signal resource set, and the last M interference measurement resources in the interference measurement resource set are associated with the M channel measurement resources according to a sequence of the M interference resources in the interference measurement resource set and a sequence of the M channel measurement resources in the reference signal resource set.

In a possible design, the CSI report includes reference signal resource indication information and CSI measurement information. A bit length of the reference signal resource indication information is determined by K and N, or a bit length of the reference signal resource indication information is determined by M and N. The CSI measurement information includes one or more of PMI information, CQI information, RI information, and LI information.

In a possible design, the reference signal resource indication information is first reference signal resource indication information, and the CSI measurement information is first CSI measurement information. An association relationship exists between the first reference signal resource indication information and a first channel measurement resource pair, and the first channel measurement resource pair is one of the N channel measurement resource pairs. An association relationship exists between the first reference signal resource indication information and a first interference measurement resource, and the first interference measurement resource is an interference measurement resource associated with the first channel measurement resource pair. The first CSI measurement information is obtained by performing measurement on the first interference measurement resource and P reference signal resources included in the first channel measurement resource pair.

In a possible design, the reference signal resource indication information is second reference signal resource indication information, and the CSI measurement information is second CSI measurement information. An association relationship exists between the second reference signal resource indication information and a first reference signal resource, and the first reference signal resource is one of the M reference signal resources. An association relationship exists between the second reference signal resource indication information and a second interference measurement resource, and the second interference measurement resource is an interference measurement resource associated with the first reference signal resource. The second CSI measurement information is obtained by performing measurement on the first reference signal resource and the second interference measurement resource.

In a possible design, the CSI report includes third reference signal resource indication information and third CSI measurement information. An association relationship exists between the third reference signal resource indication information and a second channel measurement resource pair, and the third channel measurement resource pair is one of the N channel measurement resource pairs. An association relationship exists between the third reference signal resource indication information and a third interference measurement resource, and the third interference measurement resource is an interference measurement resource associated with the second channel measurement resource pair. The third CSI measurement information is obtained by performing measurement on the third interference measurement resource and P reference signal resources included in the second channel measurement resource pair. The CSI report further includes fourth reference signal resource indication information and fourth CSI measurement information. An association relationship exists between the fourth reference signal resource indication information and a second reference signal resource, and the second reference signal resource is one of the M reference signal resources. An association relationship exists between the fourth reference signal resource indication information and a fourth interference measurement resource, and the fourth interference measurement resource is an interference resource associated with the second reference signal resource. The fourth CSI measurement information is obtained by performing measurement on the second reference signal resource and the fourth interference measurement resource.

In a possible design, the reference signal resource is an NZP CSI-RS resource, and the interference measurement resource is a CSI-IM resource.

In a possible design, the N channel measurement resource pairs correspond to a non-coherent joint transmission CSI measurement hypothesis, and the M channel measurement resources correspond to the single TRP CSI measurement hypothesis.

According to a third aspect, this application further provides an apparatus. The apparatus may perform the foregoing method design. The apparatus may be a chip or a circuit that can perform a function corresponding to the foregoing method, or a device that includes the chip or the circuit.

In a possible implementation, the apparatus includes a memory configured to store computer-executable program code and a processor, and the processor coupled to the memory. The program code stored in the memory includes instructions. When the processor executes the instructions, the apparatus or a device on which the apparatus is installed is enabled to perform the method in any one of the foregoing possible designs.

The apparatus may further include a communication interface, and the communication interface may be a transceiver. Alternatively, if the apparatus is the chip or the circuit, the communication interface may be an input/output interface of the chip, for example, an input/output pin.

In a possible design, the apparatus includes corresponding functional units, configured to implement the steps in the foregoing method. The function may be implemented by hardware, or may be implemented by executing corresponding software by hardware. The hardware or the software includes one or more units corresponding to the foregoing function.

According to a fourth aspect, this application provides a computer-readable storage medium, where the computer-readable storage medium stores a computer program. When the computer program is run on an apparatus, the method in any one of the foregoing possible designs is performed.

According to a fifth aspect, this application provides a computer program product, where the computer program product includes a computer program. When the computer program is run on an apparatus, the method in any one of the foregoing possible designs is performed.

According to a sixth aspect, this application provides a communication system, where the system includes a terminal device and a network device. The terminal device is configured to implement any possible design in the first aspect, and the network device is configured to implement any possible design in the second aspect.

### BRIEF DESCRIPTION OF DRAWINGS

FIG. 1 is a schematic diagram of an architecture of a mobile communication system to which an embodiment of this application is applied;
FIG. 2A is a schematic diagram of NCJT based on a plurality of pieces of DCI according to an embodiment of this application;
FIG. 2B is a schematic diagram of NCJT based on single DCI according to an embodiment of this application;
FIG. 3 is an overview flowchart of a method for reporting a CSI report according to an embodiment of this application;
FIG. 4A is a schematic diagram 1 of a first association relationship according to an embodiment of this application;
FIG. 4B is a schematic diagram 2 of a first association relationship according to an embodiment of this application;
FIG. 5 is a schematic diagram of a second association relationship according to an embodiment of this application;
FIG. 6 is a schematic diagram 1 of a structure of an apparatus according to an embodiment of this application; and
FIG. 7 is a schematic diagram 2 of a structure of an apparatus according to an embodiment of this application.

### DESCRIPTION OF EMBODIMENTS

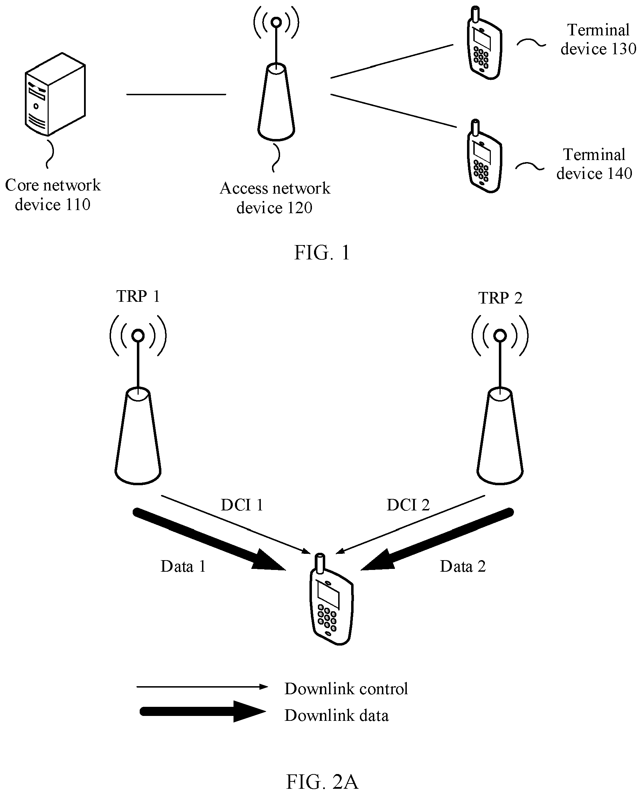

FIG. 1 is a schematic diagram of an architecture of a mobile communication system to which an embodiment of this application is applied. As shown in FIG. 1, the mobile communication system includes a core network device 110, an access network device 120, and at least one terminal device (for example, a terminal device 130 and a terminal device 140 in FIG. 1). For example, the terminal device is connected to the access network device, and the access network device is connected to the core network device in a wireless or wired manner. The core network device and the access network device may be different physical devices that are independent of each other, or functions of the core network device and logical functions of the access network device may be integrated into a same physical device, or some functions of the core network device and some functions of the access network device may be integrated into one physical device. The terminal device may be located at a fixed position, or may be mobile. FIG. 1 is only a schematic diagram. The communication system may further include other network devices, for example, may further include a relay device and a backhaul device, which are not shown in FIG. 1. In this embodiment of this application, quantities of core network devices, access network devices, and terminal devices included in the mobile communication system are not limited.

The terminal device is connected to the access network device, to access the mobile communication system. The access network device may be a base station (base station), an evolved NodeB (evolved NodeB, eNodeB), a TRP, a next generation NodeB (next generation NodeB, gNB) in a 5G mobile communication system, a base station in a future mobile communication system, an access node in a Wi-Fi system, or the like. Alternatively, the access network device may be a module or unit that implements some functions of the base station, for example, may be a central unit (central unit, CU), or may be a distributed unit (distributed unit, DU). A specific technology and a specific device form that are used by the access network device are not limited in this embodiment of this application. In this application, the access network device is referred to as a network device for short. Unless otherwise specified, network devices are all access network devices.

The terminal device may also be referred to as a terminal, user equipment (user equipment, UE), a mobile station, a mobile terminal, or the like. The terminal device may be a mobile phone, a tablet computer, a computer having a wireless transceiver function, a virtual reality terminal device, an augmented reality terminal device, a wireless terminal in industrial control, a wireless terminal in self-driving, a wireless terminal in remote surgery, a wireless terminal in a smart grid, a wireless terminal in transportation safety, a wireless terminal in a smart city, a wireless terminal in a smart home, or the like. A specific technology and a specific device form that are used by the terminal device are not limited in this embodiment of this application.

The network device and the terminal device may be deployed on the land, including an indoor device, an outdoor device, a handheld device, or a vehicle-mounted device; may be deployed on the water surface; or may be deployed on a plane, a balloon, and a satellite in the air. Application scenarios of the network device and the terminal device are not limited in this embodiment of this application.

The network device and the terminal device may communicate with each other by using a licensed spectrum, or may communicate with each other by using an unlicensed spectrum, or may communicate with each other by using both a licensed spectrum and an unlicensed spectrum. The network device and the terminal device may communicate with each other by using a spectrum below 6 gigahertz (gigahertz, GHz), may communicate with each other by using a spectrum above 6 GHz, or may communicate with each other by using both a spectrum below 6 GHz and a spectrum above 6 GHz. A spectrum resource used between the network device and the terminal device is not limited in this embodiment of this application.

It may be understood that, in the following embodiments, an example in which the network device is a TRP, and an example in which the terminal device is UE is used for description.

The following describes some technical concepts in embodiments of this application.

### 1. NCJT

NCJT is one of multi-TRP transmission technologies. Currently, a release 16 (Release 16) provides two specific implementations for NCJT:

Manner 1: NCJT based on a plurality of pieces of downlink control information (downlink control information, DCI).

For example, as shown in FIG. 2A, each of two TRPs transmits one piece of DCI, and each piece of DCI is used to schedule one physical downlink shared channel (physical downlink shared channel, PDSCH). To be specific, the two TRPs schedule two PDSCHs to send downlink data to same UE. Specifically, a TRP 1 sends DCI 1 to the UE and schedules a PDSCH 1 to send data 1, and a TRP 2 sends DCI 2 to the UE and schedules a PDSCH 2 to send data 2.

Manner 2: NCJT based on single DCI.

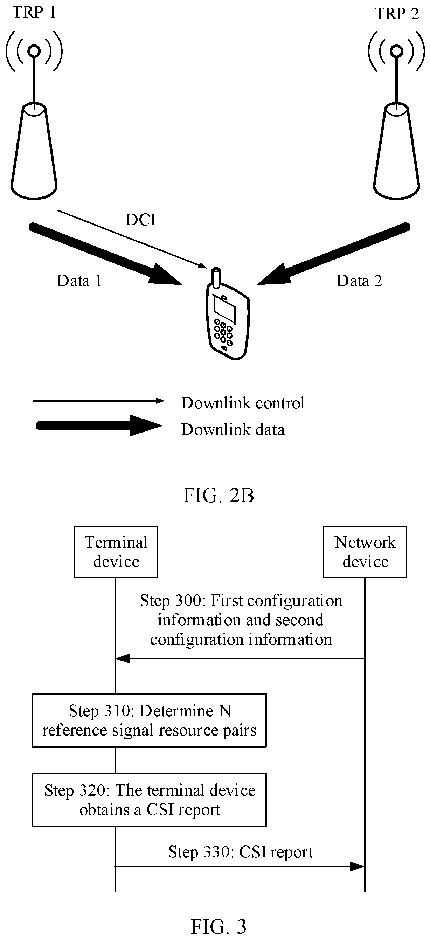

For example, as shown in FIG. 2B, only one TRP in two TRPs transmits one piece of DCI to schedule one PDSCH, but one part of streams/layers (corresponding to a part of demodulation reference signal (demodulation reference signal, DMRS) ports) in the PDSCH are transmitted by one TRP, and the other part of streams/layers (corresponding to another part of DMRS ports) are transmitted by the other TRP. Specifically, a TRP 1 sends DCI 1 to UE to schedule a first group of streams/layers/DMRS ports to send data 1 to the UE, and a TRP 2 schedules another group of streams/layers/DMRS ports to send data 2 to the UE. The foregoing two groups of streams/layers/DMRS ports belong to a PDSCH 1 scheduled by using the DCI 1. In addition, the TRP 2 may alternatively send the DCI 1 to the UE. An example in which the TRP 1 sends the DCI 1 is used for description herein, and this is not limited in this application.

### 2. Single TRP CSI measurement hypothesis

In earlier releases (for example, a release 15 (Release 15) and the release 16) of new radio (new radio, NR), CSI measurement is based on the single TRP CSI measurement hypothesis. To be specific, when UE performs CSI measurement, it is assumed that subsequent data is sent by one TRP. In this case, the UE performs CSI measurement on one reference signal resource and one interference measurement resource associated with the reference signal resource, to obtain a CSI report.

In a wireless communication process, a specific process in which a network device (for example, a TRP) obtains a CSI report is as follows:

The network device transmits a channel state sounding signal on a reference signal resource. For example, in NR, the channel state sounding signal may be an NZP CSI-RS.

UE receives the channel state sounding signal on the pre-configured reference signal resource to perform channel estimation. In addition, the TRP further configures, for the UE, a group of interference measurement resources corresponding to reference signal resources, where each reference signal resource is associated with one interference measurement resource. The UE receives a signal on these pre-configured interference measurement resources to perform interference measurement. The UE calculates one piece of CSI based on a channel measurement result obtained on one reference signal resource and an interference measurement result obtained on one associated interference measurement resource. When a configured group of reference signal resources includes a plurality of reference signal resources, the UE may calculate a plurality of pieces of CSI on the plurality of reference signal resources and a plurality of interference measurement resources associated with the plurality of reference signal resources. The UE selects one piece of CSI from the plurality of pieces of CSI to form the CSI report, and the UE sends the CSI report to the TRP through an uplink channel.

Further, the network device may perform scheduling based on a CSI report fed back by each UE, for example, send downlink data to the UE on a PDSCH.

It should be noted that, in an NR protocol, the network device configures a reference signal resource and an interference measurement resource for the UE, and the UE separately performs corresponding channel measurement and interference measurement based on a signal on the reference signal resource and a signal on the interference measurement resource. To simplify description, in embodiments of this application, the foregoing process is simply described as follows: The UE performs CSI measurement on the reference signal resource and the interference measurement resource.

### 3. NCJT CSI measurement hypothesis

After an NCJT transmission mode is introduced in the release 16, CSI measurement in the release 15 and the release 16 cannot meet a measurement requirement of the NCJT transmission mode. For this reason, in a release 17 (Release 17), existing CSI measurement is enhanced to be able to support CSI measurement based on the NCJT CSI measurement hypothesis. The NCJT CSI measurement hypothesis is: When UE performs CSI measurement, it is assumed that subsequent data is sent by two TRPs. In this case, the UE performs CSI measurement on a channel measurement resource pair and interference measurement resources associated with the channel measurement resource pair, to obtain a CSI report.

From a configuration perspective, two reference signal resources corresponding to one channel measurement resource pair are associated with two different pieces of transmission configuration indicator state (Transmission configuration indicator state, TCI state) information. Each piece of TCI state information includes quasi co-location (quasi co-location, QCL) information of a reference signal resource associated with the TCI state information. The UE receives a reference signal on a corresponding reference signal resource based on QCL information included in TCI state information. Therefore, the UE needs to know only the QCL information, but does not necessarily need to know that the reference signal resource is associated with which TRP. For a network device, the network device needs to configure, for the two reference signal resources corresponding to the channel measurement resource pair, only the TCI state information that includes different QCL information, that is, TRPs associated with the QCL information included in the two pieces of TCI state information associated with the two reference signal resources are different.

It may be understood that, in embodiments of this application, an example in which each channel measurement resource pair includes two reference signal resources is used for description. With evolution of technologies, each channel measurement resource pair may include at least two reference signal resources, and the channel measurement resource pair may also be replaced with another name, for example, a reference signal resource subset. This is not limited in embodiments of this application. An example in which each channel measurement resource pair includes two reference signal resources is used for description herein.

### 4. CSI report

To match the single TRP CSI measurement hypothesis and the NCJT CSI measurement hypothesis, content included in a CSI report configured by a network device for UE may have the following two options:
option 1: CSI corresponding to m single TRP CSI measurement hypotheses and CSI corresponding to one NCJT CSI measurement hypothesis, where a value of m may be 0, 1, or 2; and
option 2: One piece of CSI, where the CSI may be CSI corresponding to the single TRP CSI measurement hypothesis or CSI corresponding to the NCJT CSI measurement hypothesis.

For example, when N channel measurement resource pairs used to support the NCJT CSI measurement hypothesis and M reference signal resources used to support the single TRP measurement hypothesis are configured in K reference signal resources, the UE may separately perform CSI measurement on each reference signal resource and a corresponding interference measurement resource, to obtain CSI corresponding to M single TRP CSI measurement hypotheses. Similarly, the UE may separately perform CSI measurement on each channel measurement resource pair and corresponding interference measurement resources, to obtain CSI corresponding to N NCJT CSI measurement hypotheses.

Corresponding to the foregoing option 1, the UE selects, from the CSI corresponding to the M single TRP CSI measurement hypotheses, the CSI corresponding to the m single TRP CSI measurement hypotheses, and selects, from the CSI corresponding to the N NCJT CSI measurement hypotheses, CSI corresponding to one NCJT CSI measurement hypothesis. The UE sends, to the network device, the CSI corresponding to the m single TRP CSI measurement hypotheses and the CSI corresponding to one NCJT CSI measurement hypothesis.

Corresponding to the foregoing option 2, the UE selects, from the CSI corresponding to the M single TRP CSI measurement hypotheses, CSI corresponding to one single TRP CSI measurement hypothesis. Alternatively, the UE selects, from the CSI corresponding to the N NCJT CSI measurement hypotheses, CSI corresponding to one NCJT CSI measurement hypothesis. The UE sends, to the network device, the CSI corresponding to one single TRP CSI measurement hypothesis or the CSI corresponding to one NCJT CSI measurement hypothesis.

The CSI includes one or more pieces of CSI-RS resource indicator (CSI-RS resource indicator, CRI) information, rank indicator (rank indicator, RI) information, channel quality indicator (channel quality indicator, CQI) information, a precoding matrix indicator (precoding matrix indicator, PMI) PMI, and layer indicator (LI, Layer indicator) information. A CRI indicates a reference signal resource or a channel measurement resource pair, an RI indicates a rank value, a CQI indicates channel quality, a PMI indicates precoding matrix information, and an LI indicates layer information. It may be understood that which items of information specifically included in the CSI are determined based on a network configuration.

To resolve a problem that configuration parameters increase sharply because interference measurement resource sets are respectively configured to correspond to different values of M, an embodiment of this application provides a method for reporting a CSI report. As shown in FIG. 3, the method includes the following steps.

Step 300: A network device sends first configuration information and second configuration information to a terminal device.

The first configuration information is associated with reference signal resource configuration information, and the reference signal resource configuration information is used to configure a reference signal resource set and an interference measurement resource set. The reference signal resource set includes K reference signal resources, and the interference measurement resource set includes X interference measurement resources. The second configuration information indicates M reference signal resources in the K reference signal resources, M is a positive integer less than or equal to K, and the M reference signal resources correspond to a single TRP CSI measurement hypothesis.

For example, the reference signal resource may be an NZP CSI-RS resource, and the interference measurement resource may be a CSI-IM resource.

Step 310: The terminal device determines N channel measurement resource pairs, where N is an integer greater than or equal to 1, each channel measurement resource pair includes P reference signal resources, the P reference signal resources included in each channel measurement resource pair all belong to the reference signal resource set, P is an integer greater than or equal to 2, K is an integer greater than or equal to P, and X meets X=N+K.

The N channel measurement resource pairs correspond to an NCJT CSI measurement hypothesis.

For example, in a normal case, the channel measurement resource pair corresponds to a case in which P=2, in other words, each channel measurement resource pair includes two reference signal resources. When P>2, the channel measurement resource pair may also be described as a reference signal resource subset or another name. This is not limited in this embodiment of this application. An example in which the channel measurement resource pair includes two reference signal resources is used for description in this embodiment of this application.

In some implementations, when the K reference signal resources included in the reference signal resource set are K reference signal resources, the terminal device determines the N channel measurement resource pairs from the K reference signal resources based on the reference signal resource configuration information, where N is an integer greater than or equal to 1, and each channel measurement resource pair includes two NZP CSI-RS resources. The two reference signal resources included in the channel measurement resource pair may be determined from the K reference signal resources in but is not limited to the following manner:
Example 1: The terminal device determines the channel measurement resource pair from the K reference signal resources based on first signaling sent by the network device.

For example, the first signaling may indicate the quantity N of channel measurement resource pairs and N bitmaps including K bits, where values of two bits in each bitmap are "0", indicating that corresponding reference signal resources in the reference signal resource set can be used as reference signal resources in the channel measurement resource pair, and a value of another bit is " 1", indicating that a corresponding reference signal resource in the reference signal resource set cannot be used as a reference signal resource in the channel measurement resource pair. Alternatively, values of two bits in each bitmap are "1", indicating that corresponding reference signal resources in the reference signal resource set can be used as reference signal resources in the channel measurement resource pair, and a value of another bit is "0", indicating that a corresponding reference signal resource in the reference signal resource set cannot be used as a reference signal resource in the channel measurement resource pair.

For example, the reference signal resource set includes four (in other words, K=4) reference signal resources, which are {#0, #1, #2, and #3}, respectively, the foregoing signaling indicates N=1 and one bitmap, and a value of the bitmap is 0011. In this case, the reference signal resources corresponding to #0 and #1 form a channel measurement resource pair.

Example 2: The terminal device determines the channel measurement resource pair from the K reference signal resources according to a preset rule.

For example, the preset rule may be that when the reference signal resource set includes two (K=2) reference signal resources, the two reference signal resources form a channel measurement resource pair. For example, the two reference signal resources are {#0, #1}, respectively. In this case, the reference signal resources corresponding to #0 and #1 form a channel measurement resource pair.

Alternatively, the preset rule may be that two adjacent reference signal resources in the K reference signal resources are combined to form a channel measurement resource pair. For example, the reference signal resource set includes four (K=4) reference signal resources {#0, #1, #2, #3}. In this case, the reference signal resources corresponding to #0 and #1 form a channel measurement resource pair, and the reference signal resources corresponding to #2 and #3 form another channel measurement resource pair.

Example 3: The channel measurement resource pair is determined in combination with Example 1 and Example 2.

For example, the channel measurement resource pair is determined from the K reference signal resources based on the first signaling and according to the preset rule.

For example, the first signaling indicates the quantity N of channel measurement resource pairs, and the preset rule may be that any two (which may also be understood as every two) adjacent reference signal resources in the first 2N reference signal resources in the K reference signal resources are combined to form the N channel measurement resource pairs. For example, the reference signal resource set includes six (K=6) reference signal resources {#0, #1, #2, #3, #4, and #5}, and the first signaling indicates N=2. In this case, the reference signal resources corresponding to #0 and #1 form a channel measurement resource pair, and the reference signal resources corresponding to #2 and #3 form another channel measurement resource pair.

The following further describes the first configuration information.

For example, the first configuration information is CSI report configuration information, and the CSI report configuration information includes the second configuration information. For example, in NR, the CSI report configuration information may be an RRC signaling CSI measurement configuration (CSI-MeasConfig), or the CSI report configuration information may be RRC signaling CSI report configuration (CSI-ReportConfig).

In some embodiments, the CSI report configuration information includes the reference signal resource configuration information, and the reference signal resource configuration information is used to determine the reference signal resource set and the interference measurement resource set.

In an example, the reference signal resource configuration information may be an RRC signaling NZP-CSI-RS-ResourceSet (NZP-CSI-RS-ResourceSet) and a CSI-IM-ResourceSet (CSI-IM-ResourceSet). The former is used to determine the reference signal resource set, and the latter is used to determine the interference measurement resource set. For example, the reference signal resource set is an NZP CSI-RS resource set, and the interference measurement resource set is a CSI-IM resource set.

In another example, the reference signal resource configuration information may include an RRC signaling NZP-CSI-RS-ResourceSet and a CSI-IM-ResourceSet. The reference signal resource configuration information includes two NZP-CSI-RS-ResourceSets, where one NZP-CSI-RS-ResourceSet is used to determine the reference signal resource set, and the other NZP-CSI-RS-ResourceSet and the CSI-IM-ResourceSet are used to determine two interference measurement resource sets. An interference measurement resource set determined by using the NZP-CSI-RS-ResourceSet includes NZP CSI-RS resources and is used to measure multi-user interference. An interference measurement resource set determined by using the CSI-IM-ResourceSet includes CSI-IM resources and is used to measure neighboring cell interference.

It may be understood that, in the NCJT CSI measurement hypothesis, interference measurement based on an NZP CSI-RS resource has been excluded. In this embodiment of this application, an example in which the interference measurement resource set is the CSI-IM resource set is merely used for description. In addition, the method provided in this embodiment of this application is also applicable to a case in which the interference measurement resource set further includes the NZP CSI-RS resource set.

The following describes a possible implementation of the second configuration information.

Manner 1: The second configuration information includes K bits, and the K bits correspond to the K reference signal resources.

For example, the second configuration information is a bitmap of K bits, and each bit corresponds to one reference signal resource. For any bit, when a value of the bit is 1, a reference signal resource corresponding to the bit is a reference signal resource corresponding to the single TRP CSI measurement hypothesis, or a reference signal resource corresponding to the bit is used for CSI measurement based on the single TRP CSI measurement hypothesis. When the value of the bit is 0, the reference signal resource corresponding to the bit is not the reference signal resource corresponding to the single TRP CSI measurement hypothesis, or the reference signal resource corresponding to the bit is not used for CSI measurement based on the single TRP CSI measurement hypothesis.

For example, when K=4, the reference signal resource set includes a reference signal resource 1 to a reference signal resource 4. The reference signal resource 1 and the reference signal resource 2 correspond to a TRP 1, and the reference signal resource 3 and the reference signal resource 4 correspond to a TRP 2. A channel measurement resource pair includes the reference signal resource 1 and the reference signal resource 3. When the second configuration information includes 4-bit information, a first bit indicates whether the reference signal resource 1 is a reference signal resource corresponding to the single TRP CSI measurement hypothesis, a second bit indicates whether the reference signal resource 2 is a reference signal resource corresponding to the single TRP CSI measurement hypothesis, a third bit indicates whether the reference signal resource 3 is a reference signal resource corresponding to the single TRP CSI measurement hypothesis, and a fourth bit indicates whether the reference signal resource 4 is a reference signal resource corresponding to the single TRP CSI measurement hypothesis.

Manner 2: The second configuration information indicates whether reference signal resources corresponding to the N channel measurement resource pairs are used for CSI measurement based on the single transmission reception point TRP CSI measurement hypothesis.

For example, the second configuration information includes 1-bit information. When a value of the bit is 1, it indicates that the reference signal resources corresponding to the N channel measurement resource pairs are enabled to be used for CSI measurement based on the single TRP CSI measurement hypothesis. In this case, M=K. When the value of the bit is 0, it indicates that the reference signal resources corresponding to the N channel measurement resource pairs are not enabled to be used for CSI measurement based on the single TRP CSI measurement hypothesis. In this case, M=K-2N.

For example, when K=4, the reference signal resource set includes a reference signal resource 1 to a reference signal resource 4. The reference signal resource 1 and the reference signal resource 2 correspond to a TRP 1, and the reference signal resource 3 and the reference signal resource 4 correspond to a TRP 2. A channel measurement resource pair includes the reference signal resource 1 and the reference signal resource 3. When the second configuration information includes the 1-bit information, and when the value of the bit is 1, the reference signal resource 1, the reference signal resource 2, the reference signal resource 3, and the reference signal resource 4 all can be used for CSI measurement based on the single TRP CSI measurement hypothesis. When the second configuration information includes the 1-bit information, and when the value of the bit is 0, the reference signal resource 2 and the reference signal resource 4 may be used for CSI measurement based on the single TRP CSI measurement hypothesis, and the reference signal resource 1 and the reference signal resource 3 cannot be used for CSI measurement based on the single TRP CSI measurement hypothesis, and are used for only CSI measurement based on the NCJT CSI measurement hypothesis.

It may be understood that, because a value of M determined based on the second configuration information directly determines a quantity of reference signal resources for the single TRP CSI measurement hypothesis, when the terminal device subsequently reports a CSI report, a CRI included in CSI indicates a measurement resource associated with the CSI. However, a bit length or load of the CRI is affected by a quantity of single TRP CSI measurement hypotheses, in other words, the value of M directly affects a bit length or load of a subsequent CSI report. For example, when K=4 and M=2, the CRI indicates that one of the M reference signal resources needs one bit. When K=4 and M=4, the CRI indicates that one of the M reference signal resources needs two bits. When K=8 and M=6, the CRI indicates that one of the M reference signal resources needs three bits.

Therefore, when the first configuration information is the CSI report configuration information, and the CSI report configuration information includes the second configuration information, a CSI report configuration parameter indicated by one piece of CSI report configuration information corresponds to a bit length or load of a CSI report. This facilitates standard formulation and product implementation.

It may be understood that, in the K reference signal resources included in the reference signal resource set, the M reference signal resources are used for CSI measurement based on the single TRP CSI measurement hypothesis, and the N channel measurement resource pairs are used for CSI measurement based on the NCJT CSI measurement hypothesis. Because each measurement hypothesis requires one CSI-IM resource, normally, the interference measurement resource set includes X CSI-IM resources, and only X=M+N is enough. However, in the CSI report configuration information, the CSI report configuration information is associated with the reference signal resource set and the interference measurement resource set that are configured by using the reference signal resource configuration information. When CSI report configuration parameters included in two pieces of CSI report configuration information are the same other than configuration parameters of the value of M (in other words, second configuration information is different), the two pieces of CSI report configuration information may be associated with a same reference signal resource set that includes K reference signal resources, and may be associated with same N channel measurement resource pairs. Because the second configuration information is included in the CSI report configuration information, when the values of M are different, if a quantity of CSI-IM resources included in the interference measurement resource set is configured based on X=M+N, the same reference signal resource set is associated with two different interference measurement resource sets based on the two pieces of CSI report configuration information. Therefore, a quantity of configured interference measurement resource sets is greatly increased, and storage burden of the terminal device is increased. Therefore, in this embodiment of this application, the interference measurement resource set includes the X CSI-IM resources, where X=N+K. Therefore, interference measurement resource sets associated with a same reference signal resource set are the same even if the values of M are different, thereby effectively reducing resource configuration complexity and the storage burden of the terminal device.

The following describes an association relationship between the interference measurement resource set and the reference signal resource set.

It should be noted that, in this embodiment of this application, a sequence of the reference signal resources in the reference signal resource set may be understood as a sequence in which identifiers of the reference signal resources appear in configuration information of the reference signal resource set. Similarly, a sequence of the interference measurement resources in the interference measurement resource set may be understood as a sequence in which identifiers of the interference measurement resources appear in configuration information of the interference measurement resource set.

In an implementation, a first association relationship exists between the X interference measurement resources included in the interference measurement resource set and the K reference signal resources and the N channel measurement resource pairs.

For example, a first implementation of the first association relationship is as follows: The first association relationship may mean that the first K interference measurement resources in the interference measurement resource set are associated with the K reference signal resources, where the association is that the K interference measurement resources are associated with the K reference signal resources according to a sequence of the first K interference measurement resources in the interference resource set and a sequence of the K reference signal resources in the reference signal resource set; and the last N interference measurement resources in the interference measurement resource set are associated with the N channel measurement resource pairs, where the association is that the N interference measurement resources are associated with the N channel measurement resource pairs according to a sequence of the last N interference measurement resources in the interference resource set and a sequence of the N channel measurement resource pairs in the reference signal resource set. It should be noted that, in the foregoing example, the sequence of the reference signal resources in the reference signal resource set is irrelevant to sequence numbers of the reference signal resources, and the sequence of the interference measurement resources in the interference resource set is irrelevant to sequence numbers of the interference resources. Similarly, the sequence of the channel measurement resource pairs in the reference signal resource set is irrelevant to sequence numbers of the channel measurement resource pairs.

A second implementation of the first association relationship is as follows: The first association relationship may mean that the first N interference measurement resources in the interference measurement resource set are associated with the N channel measurement resource pairs, where the association is that the N interference measurement resources are associated with the N reference signal resources according to a sequence of the first N interference measurement resources in the interference resource set and a sequence of the N channel measurement resource pairs in the reference signal resource set; and the last K interference measurement resources in the interference measurement resource set are associated with the K reference signal resources, where the association is that the K interference measurement resources are associated with the K reference signal resource pairs according to a sequence of the last K interference measurement resources in the interference resource set and a sequence of the K reference signal resources in the reference signal resource set.

The following uses only the first implementation of the first association relationship as an example for description.

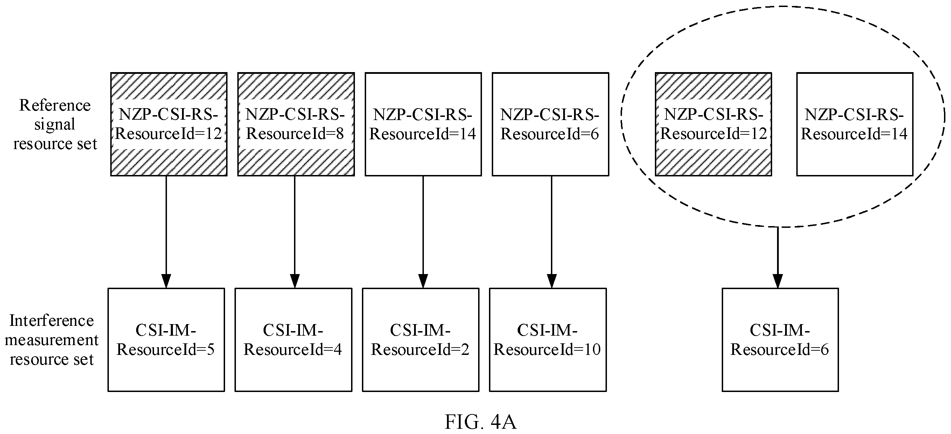

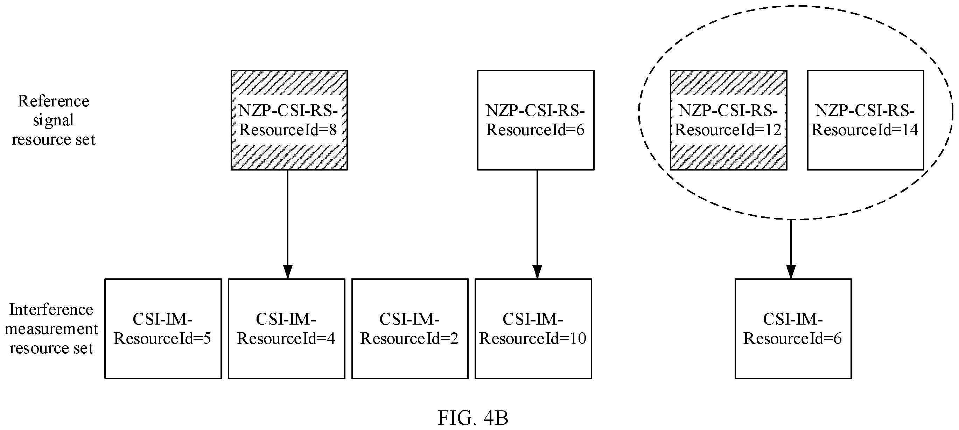

As shown in FIG. 4A and FIG. 4B, the reference signal resource set includes four reference signal resources, in other words, K=4. A first reference signal resource and a third reference signal resource form a channel measurement resource pair, in other words, N=1. The corresponding interference measurement resource set includes five interference measurement resources, in other words, X=K+N=5.

For example, a sequence in which identifiers of the four reference signal resources appear in the configuration information of the reference signal resource set may be NZP-CSI-RS-ResourceId=12, NZP-CSI-RS-ResourceId=8, NZP-CSI-RS-ResourceId=14, and NZP-CSI-RS-ResourceId=6.

A sequence in which identifiers of the five interference measurement resources appear in the configuration information of the interference measurement resource set may be CSI-IM-ResourceId=5, CSI-IM-ResourceId=4, CSI-IM-ResourceId=2, CSI-IM-ResourceId=10, and CSI-IM-ResourceId=6.

The four reference signal resources in the reference signal resource set are associated with the first four interference measurement resources in the interference measurement resource set according to a sequence of the four reference signal resources in the reference signal resource set and a sequence of the first four interference measurement resources in the interference measurement resource set. To be specific, an association relationship exists between the first reference signal resource (corresponding to the NZP-CSI-RS-ResourceId of 12) in the reference signal resource set and a first interference measurement resource (corresponding to the CSI-IM-ResourceId of 5) in the interference measurement resource set; an association relationship exists between a second reference signal resource (corresponding to the NZP-CSI-RS-ResourceId of 8) in the reference signal resource set and a second interference measurement resource (corresponding to the CSI-IM-ResourceId of 4) in the interference measurement resource set; an association relationship exists between the third reference signal resource (corresponding to the NZP-CSI-RS-ResourceId of 14) in the reference signal resource set and a third interference measurement resource (corresponding to the CSI-IM-ResourceId of 2) in the interference measurement resource set; an association relationship exists between a fourth reference signal resource (corresponding to the NZP-CSI-RS-ResourceId of 6) in the reference signal resource set and a fourth interference measurement resource (corresponding to the CSI-IM-ResourceId of 10) in the interference measurement resource set; and an association relationship exists between the channel measurement resource pair in the reference signal resource set and the last N=1 interference measurement resource in the interference measurement resource set in sequence, in other words, an association relationship exists between the channel measurement resource pair and the last interference measurement resource, that is, a fifth interference measurement resource (corresponding to the CSI-IM-ResourceId of 6).

For example, when the second configuration information indicates that four reference signal resources are used for CSI measurement based on the single TRP measurement hypothesis, for example, when the second configuration information includes the 1-bit information, and when the value of the bit is 1, it indicates that the reference signal resources included in the channel measurement resource pair are enabled to be used for CSI measurement based on the single TRP measurement hypothesis. As described above, each reference signal resource and an associated interference measurement resource are shown in FIG. 4A.

For example, when the second configuration information indicates that two reference signal resources are used for CSI measurement based on the single TRP measurement hypothesis, for example, when the second configuration information includes the 1-bit information, and when the value of the bit is 0, it indicates that the reference signal resources included in the channel measurement resource pair are enabled not to be used for CSI measurement based on the single TRP measurement hypothesis. Reference signal resources used for the single TRP measurement hypothesis are only the second reference signal resource and the fourth reference signal resource. As described above, the association relationship exists between the second reference signal resource (corresponding to the NZP-CSI-RS-ResourceId of 8) in the reference signal resource set and the second interference measurement resource (corresponding to the CSI-IM-ResourceId of 4) in the interference measurement resource set; the association relationship exists between the fourth reference signal resource (corresponding to the NZP-CSI-RS-ResourceId of 6) in the reference signal resource set and the fourth interference measurement resource (corresponding to the CSI-IM-ResourceId of 10) in the interference measurement resource set; and the association relationship exists between the channel measurement resource pair in the reference signal resource set and the last N=1 interference measurement resource in the interference measurement resource set in sequence, in other words, the association relationship exists between the channel measurement resource pair and the last interference measurement resource, that is, the fifth interference measurement resource (corresponding to the CSI-IM-ResourceId of 6), as shown in FIG. 4B.

The first association relationship is used, so that reference signal resources or channel measurement resource pairs associated with a same interference measurement resource are not changed even if the values of M indicated by the second configuration information are different, which facilitates interference measurement accuracy. Especially, when the interference measurement resource is a periodic or semi-persistent resource, the terminal device usually performs time-domain filtering. When the reference signal resources or channel measurement resource pairs associated with the same interference measurement resource remain unchanged, filtering performance is facilitated, and interference estimation accuracy is improved.

In another implementation, a second association relationship exists between M+N interference measurement resources in the X interference measurement resources included in the interference measurement resource set and the M reference signal resources and the N channel measurement resource pairs.

For example, a first implementation of the second association relationship is as follows: The second association relationship may mean that the first M interference measurement resources in the interference measurement resource set are associated with the M reference signal resources, where the association is that the M interference measurement resources are associated with the M reference signal resources according to a sequence of the first M interference measurement resources in the interference resource set and a sequence of the M reference signal resources in the reference signal resource set, and the last N interference measurement resources in the interference measurement resource set are associated with the N channel measurement resource pairs, where the association is that the N interference measurement resources are associated with the N channel measurement resource pairs according to a sequence of the last N interference measurement resources in the interference resource set and a sequence of the N channel measurement resource pairs in the reference signal resource set.

A second implementation of the second association relationship is as follows: The second association relationship may mean that the first N interference measurement resources in the interference measurement resource set are associated with the N reference signal resource pairs, where the association is that the N interference measurement resources are associated with the N reference signal resource pairs according to a sequence of the first N interference measurement resources in the interference resource set and the sequence of the N reference signal resource pairs, and the last M interference measurement resources in the interference measurement resource set are associated with the M channel measurement resources, where the association is that the M interference measurement resources are associated with the M channel measurement resources according to a sequence of the last M interference measurement resources in the interference resource set and a sequence of the M channel measurement resources in the reference signal resource set.

The following uses only the first implementation of the second association relationship as an example for description.

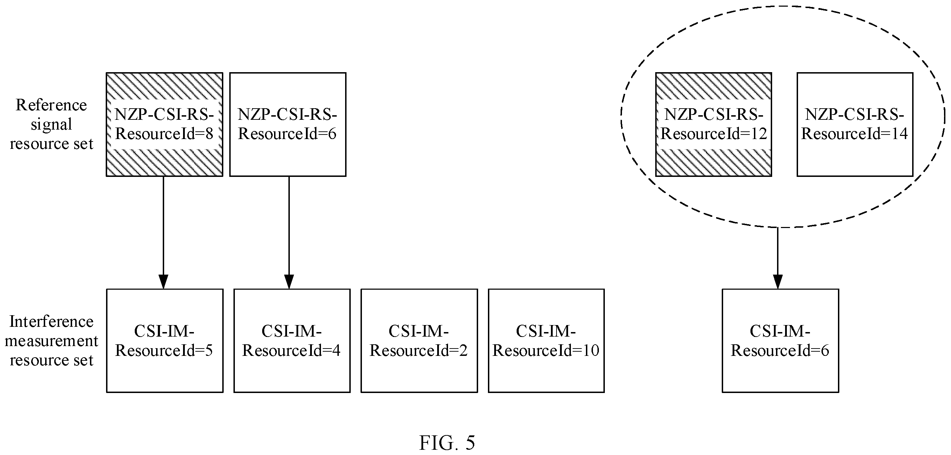

As shown in FIG. 4A and FIG. 5, the reference signal resource set includes four reference signal resources, in other words, K=4. A first reference signal resource and a third reference signal resource form a channel measurement resource pair, in other words, N=1. The corresponding interference measurement resource set includes five interference measurement resources, in other words, X=K+N=5.

For example, a sequence in which identifiers of the four reference signal resources appear in the configuration information of the reference signal resource set may be NZP-CSI-RS-ResourceId=12, NZP-CSI-RS-ResourceId=8, NZP-CSI-RS-ResourceId=14, and NZP-CSI-RS-ResourceId=6.

A sequence in which identifiers of the five interference measurement resources appear in the configuration information of the interference measurement resource set may be CSI-IM-ResourceId=5, CSI-IM-ResourceId=4, CSI-IM-ResourceId=2, CSI-IM-ResourceId=10, and CSI-IM-ResourceId=6.

For example, when the second configuration information indicates that four reference signal resources are used for CSI measurement based on the single TRP measurement hypothesis, for example, when the second configuration information includes the 1-bit information, and when the value of the bit is 1, it indicates that the reference signal resources included in the channel measurement resource pair are enabled to be used for CSI measurement based on the single TRP measurement hypothesis. Each reference signal resource and an associated interference measurement resource are shown in FIG. 4A. The four reference signal resources in the reference signal resource set are associated with the first four interference measurement resources in the interference measurement resource set according to a sequence of the four reference signal resources in the reference signal resource set and a sequence of the first four interference measurement resources in the interference measurement resource set. To be specific, an association relationship exists between the first reference signal resource (corresponding to the NZP-CSI-RS-ResourceId of 12) in the reference signal resource set and a first interference measurement resource (corresponding to the CSI-IM-ResourceId of 5) in the interference measurement resource set; an association relationship exists between a second reference signal resource (corresponding to the NZP-CSI-RS-ResourceId of 8) in the reference signal resource set and a second interference measurement resource (corresponding to the CSI-IM-ResourceId of 4) in the interference measurement resource set; an association relationship exists between the third reference signal resource (corresponding to the NZP-CSI-RS-ResourceId of 14) in the reference signal resource set and a third interference measurement resource (corresponding to the CSI-IM-ResourceId of 2) in the interference measurement resource set; an association relationship exists between a fourth reference signal resource (corresponding to the NZP-CSI-RS-ResourceId of 6) in the reference signal resource set and a fourth interference measurement resource (corresponding to the CSI-IM-ResourceId of 10) in the interference measurement resource set; and an association relationship exists between the channel measurement resource pair in the reference signal resource set and the last N=1 interference measurement resource in the interference measurement resource set in sequence, in other words, an association relationship exists between the channel measurement resource pair and the last interference measurement resource, that is, a fifth interference measurement resource (corresponding to the CSI-IM-ResourceId of 6).

For example, when the second configuration information indicates that two reference signal resources are used for CSI measurement based on the single TRP measurement hypothesis, for example, when the second configuration information includes the 1-bit information, and when the value of the bit is 0, it indicates that the reference signal resources included in the channel measurement resource pair are enabled not to be used for CSI measurement based on the single TRP measurement hypothesis. Reference signal resources used for the single TRP measurement hypothesis are only the second reference signal resource and the fourth reference signal resource.

As shown in FIG. 5, the second reference signal resource and the fourth reference signal resource in the reference signal resource set are associated with the first two interference measurement resources in the interference measurement resource set according to a sequence of the second reference signal resource and the fourth reference signal resource in the reference signal resource set and a sequence of the first two interference measurement resources in the interference measurement resource set. To be specific, an association relationship exists between the second reference signal resource (corresponding to the NZP-CSI-RS-ResourceId of 8) in the reference signal resource set and the first interference measurement resource (corresponding to the CSI-IM-ResourceId of 5) in the interference measurement resource set; an association relationship exists between the fourth reference signal resource (corresponding to the NZP-CSI-RS-ResourceId of 6) in the reference signal resource set and the second interference measurement resource (corresponding to the CSI-IM-ResourceId of 4) in the interference measurement resource set; and an association relationship exists between the channel measurement resource pair in the reference signal resource set and the last N=1 interference measurement resource in the interference measurement resource set in sequence, in other words, an association relationship exists between the channel measurement resource pair and the last interference measurement resource, that is, a fifth interference measurement resource (corresponding to the CSI-IM-ResourceId of 6).

The second association relationship is used, so that when the second configuration information indicates that the reference signal resources included in the N channel measurement resource pairs are not used for the CSI measurement based on the single TRP CSI measurement hypothesis, the interference measurement resources associated with the M reference signal resources for CSI measurement based on the single TRP CSI measurement hypothesis are continuous. Because CRI needs to have an association relationship with an interference measurement resource, a quantity of bits fed back by the CRI may be reduced. In addition, a same interference measurement resource has an association relationship with a reference signal resource for CSI measurement based on the single TRP measurement hypothesis, or has an association relationship with a reference signal resource for CSI measurement based on the NCJT CSI measurement hypothesis.

Step 320: The terminal device obtains the CSI report.

An association relationship exists between the CSI report and the M reference signal resources and M interference measurement resources associated with the M reference signal resources, and an association relationship exists between the CSI report and the reference signal resources included in the N channel measurement resource pairs and N interference measurement resources associated with the reference signal resources.

For example, the CSI report includes reference signal resource indication information and CSI measurement information. A bit length of the reference signal resource indication information is determined by K and N, or a bit length of the reference signal resource indication information is determined by M and N.

For example, corresponding to the first association relationship, the bit length of the reference signal resource indication information may be determined by K and N. In addition, corresponding to the first association relationship, the bit length of the reference signal resource indication information may be alternatively determined by M and N.

For example, corresponding to the second association relationship, the bit length of the reference signal resource indication information may be determined by M and N. In addition, corresponding to the second association relationship, the bit length of the reference signal resource indication information may be alternatively determined by K and N.

The CSI measurement information includes one or more of PMI information, CQI information, RI information, and LI information.

In an implementation, the reference signal resource indication information is first reference signal resource indication information, and the CSI measurement information is first CSI measurement information. An association relationship exists between the first reference signal resource indication information and a first channel measurement resource pair, and the first channel measurement resource pair is one of the N channel measurement resource pairs. An association relationship exists between the first reference signal resource indication information and a first interference measurement resource, and the first interference measurement resource is an interference measurement resource associated with the first channel measurement resource pair. The first CSI measurement information is obtained by performing measurement on the first interference measurement resource and P reference signal resources included in the first channel measurement resource pair.

In an implementation, the reference signal resource indication information is second reference signal resource indication information, and the CSI measurement information is second CSI measurement information. An association relationship exists between the second reference signal resource indication information and a first reference signal resource, and the first reference signal resource is one of the M reference signal resources. An association relationship exists between the second reference signal resource indication information and a second interference measurement resource, and the second interference measurement resource is an interference measurement resource associated with the first reference signal resource. The second CSI measurement information is obtained by performing measurement on the first reference signal resource and the second interference measurement resource.

In an implementation, the reference signal resource indication information includes third reference signal resource indication information and fourth reference signal resource indication information, and the CSI measurement information includes third CSI measurement information and fourth CSI measurement information.

An association relationship exists between the third reference signal resource indication information and a second channel measurement resource pair, and the third channel measurement resource pair is one of the N channel measurement resource pairs. An association relationship exists between the third reference signal resource indication information and a third interference measurement resource, and the third interference measurement resource is an interference measurement resource associated with the second channel measurement resource pair. The third CSI measurement information is obtained by performing measurement on the third interference measurement resource and P reference signal resources included in the second channel measurement resource pair.

An association relationship exists between the fourth reference signal resource indication information and a second reference signal resource, and the second reference signal resource is one of the M reference signal resources. An association relationship exists between the fourth reference signal resource indication information and a fourth interference measurement resource, and the fourth interference measurement resource is an interference resource associated with the second reference signal resource. The fourth CSI measurement information is obtained by performing measurement on the second reference signal resource and the fourth interference measurement resource.

For example, the terminal device performs CSI measurement on each reference signal resource in the M reference signal resources and an interference measurement resource associated with the reference signal resource, to obtain CSI corresponding to M single TRP CSI measurement hypotheses.

In addition, the terminal device performs CSI measurement on each channel measurement resource pair in the N channel measurement resource pairs and interference measurement resources associated with the channel measurement resource pair, to obtain CSI corresponding to N NCJT CSI measurement hypotheses.

It can be learned from the foregoing related descriptions about the CSI report that, corresponding to the foregoing option 1, the terminal device may select, from the CSI corresponding to the M single TRP CSI measurement hypotheses, CSI corresponding to m single TRP CSI measurement hypotheses, and select, from the CSI corresponding to the N NCJT CSI measurement hypotheses, CSI corresponding to one NCJT CSI measurement hypothesis, to obtain the CSI report.

Corresponding to the foregoing option 2, the terminal device selects, from the CSI corresponding to the M single TRP CSI measurement hypotheses, CSI corresponding to one single TRP CSI measurement hypothesis. Alternatively, the terminal device selects, from the CSI corresponding to the N NCJT CSI measurement hypotheses, CSI corresponding to one NCJT CSI measurement hypothesis, to obtain the CSI report.

Step 330: The terminal device sends the CSI report to the network device.

According to the embodiment shown in FIG. 3, under the NCJT CSI measurement hypothesis, how to configure a quantity of interference measurement resources configured in the interference measurement resource set associated with the reference signal resource set and how the interference measurement resources in the interference measurement resource set are associated with the reference signal resources for the single TRP CSI measurement hypothesis and the channel measurement resource pair for the NCJT CSI measurement hypothesis are resolved. The interference measurement resource set includes the X interference measurement resources, where X=N+K. Therefore, interference measurement resource sets associated with a same reference signal resource set are the same even if the values of M are different, thereby effectively reducing resource configuration complexity and the storage burden of the terminal device.

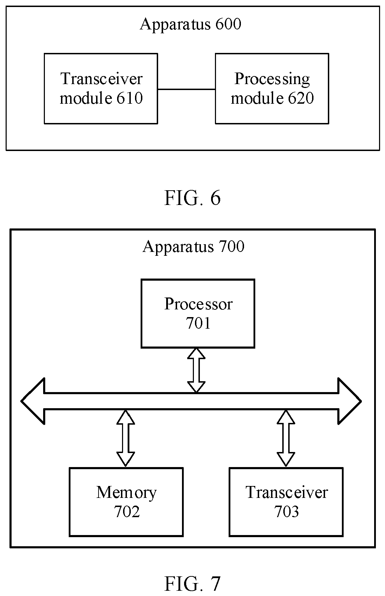

FIG. 6 shows an example of a possible block diagram of an apparatus according to an embodiment of this application. An apparatus 600 includes a transceiver module 610 and a processing module 620. The transceiver module 610 may include a receiving unit and a sending unit. The processing module 620 is configured to control and manage an action of the apparatus 600. The transceiver module 610 is configured to support communication between the apparatus 600 and another network entity. Optionally, the apparatus 600 may further include a storage unit, and the storage unit is configured to store program code and data of the apparatus 600.

Optionally, the modules in the apparatus 600 may be implemented by using software.

Optionally, the processing module 620 may be a processor or a controller, for example, may be a general-purpose central processing unit (central processing unit, CPU), a general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The processing module 620 may implement or execute various example logical blocks, modules, and circuits described with reference to content disclosed in embodiments of this application. The processor may be a combination of processors implementing a computing function, for example, a combination of one or more microprocessors, or a combination of the DSP and a microprocessor. The transceiver module 610 may be a communication interface, a transceiver, a transceiver circuit, or the like. The communication interface is a general term. In specific implementation, the communication interface may include a plurality of interfaces, and the storage unit may be a memory.

When the apparatus 600 is a terminal device or a chip in the terminal device, the processing module 620 in the apparatus 600 may support the apparatus 600 in performing actions of the terminal device in the foregoing method examples. For example, the processing module 620 may support the apparatus 600 in performing step 310 and step 320 in FIG. 3.

The transceiver module 610 may support communication between the apparatus 600 and a network device. For example, the transceiver module 610 may support the apparatus 600 in performing step 300 and step 330 in FIG. 3.

For example, details may be as follows:
In an implementation, the apparatus 600 includes:
the transceiver module 610 is configured to receive first configuration information and second configuration information, where the first configuration information is associated with reference signal resource configuration information, and the reference signal resource configuration information is used to configure a reference signal resource set and an interference measurement resource set, where the reference signal resource set includes K reference signal resources, and the interference measurement resource set includes X interference measurement resources; and
the processing module 620 is configured to determine N channel measurement resource pairs, where N is an integer greater than or equal to 1, each channel measurement resource pair includes P reference signal resources, the P reference signal resources included in each channel measurement resource pair all belong to the reference signal resource set, P is an integer greater than or equal to 2, K is an integer greater than or equal to P, X meets X=N+K, the second configuration information indicates M reference signal resources in the K reference signal resources, and M is a positive integer less than or equal to K; and a first association relationship exists between the X interference measurement resources included in the interference measurement resource set and the K reference signal resources and the N channel measurement resource pairs, or a second association relationship exists between M+N interference measurement resources in the X interference measurement resources included in the interference measurement resource set and the M reference signal resources and the N channel measurement resource pairs.

The processing module 620 controls the transceiver module to obtain a CSI report, where an association relationship exists between the CSI report and the M reference signal resources and M interference measurement resources associated with the M reference signal resources, and an association relationship exists between the CSI report and reference signal resources included in the N channel measurement resource pairs and N interference measurement resources associated with the reference signal resources.

The transceiver module 610 is configured to send the CSI report to the network device.

It should be understood that the apparatus 600 in this embodiment of this application may correspond to the terminal device in the foregoing method embodiment, and operations and/or functions of the modules in the apparatus 600 are separately used to implement corresponding steps of the method performed by the terminal device in the foregoing method embodiment. Therefore, beneficial effect in the foregoing method embodiment may also be implemented. For brevity, details are not described herein again.

When the apparatus 600 is a network device or a chip in the network device, the processing module 620 in the apparatus 600 may support the apparatus 600 in performing actions of the network device in the foregoing method examples.

The transceiver module 610 may support communication between the apparatus 600 and a terminal device. For example, the transceiver module 610 may support the apparatus 600 in performing step 300 and step 330 in FIG. 3.

For example, details may be as follows:
In an implementation, the transceiver module 610 is configured to send first configuration information and second configuration information to the terminal device, where the first configuration information is associated with reference signal resource configuration information, and the reference signal resource configuration information is used to configure a reference signal resource set and an interference measurement resource set, where the reference signal resource set includes K reference signal resources, and the interference measurement resource set includes X interference measurement resources; and
the processing module 620 is configured to determine N channel measurement resource pairs, where N is an integer greater than or equal to 1, each channel measurement resource pair includes P reference signal resources, the P reference signal resources included in each channel measurement resource pair all belong to the reference signal resource set, P is an integer greater than or equal to 2, K is an integer greater than or equal to P, X meets X=N+K, the second configuration information indicates M reference signal resources in the K reference signal resources, and M is a positive integer less than or equal to K; and a first association relationship exists between the X interference measurement resources included in the interference measurement resource set and the K reference signal resources and the N channel measurement resource pairs, or a second association relationship exists between M+N interference measurement resources in the X interference measurement resources included in the interference measurement resource set and the M reference signal resources and the N channel measurement resource pairs.

The transceiver module 610 is configured to: separately send reference signals on the K reference signal resources, and receive a CSI report from the terminal device, where an association relationship exists between the CSI report and the M reference signal resources and M interference measurement resources associated with the M reference signal resources, and an association relationship exists between the CSI report and reference signal resources included in the N channel measurement resource pairs and N interference measurement resources associated with the reference signal resources.

It should be understood that the apparatus 600 in this embodiment of this application may correspond to the method performed by the network device in the foregoing method embodiment, and operations and/or functions of the modules in the apparatus 600 are separately used to implement corresponding steps of the method performed by the network device in the foregoing method embodiment. Therefore, beneficial effect in the foregoing method embodiment may also be implemented. For brevity, details are not described herein again.

FIG. 7 is a schematic diagram of a structure of a communication apparatus 700 according to an embodiment of this application. As shown in FIG. 7, the apparatus 700 includes a processor 701.

When the apparatus 600 is a terminal device or a chip in the terminal device, in a possible implementation, when the processor 701 is configured to invoke an interface to perform the following actions:
receiving first configuration information and second configuration information, where the first configuration information is associated with reference signal resource configuration information, the reference signal resource configuration information is used to configure a reference signal resource set and an interference measurement resource set, the reference signal resource set includes K reference signal resources, and the interference measurement resource set includes X interference measurement resources; determining N channel measurement resource pairs, where N is an integer greater than or equal to 1, each channel measurement resource pair includes P reference signal resources, the P reference signal resources included in each channel measurement resource pair all belong to the reference signal resource set, P is an integer greater than or equal to 2, K is an integer greater than or equal to P, X meets X=N+K, the second configuration information indicates M reference signal resources in the K reference signal resources, M is a positive integer less than or equal to K, a first association relationship exists between the X interference measurement resources included in the interference measurement resource set and the K reference signal resources and the N channel measurement resource pairs, or a second association relationship exists between M+N interference measurement resources in the X interference measurement resources included in the interference measurement resource set and the M reference signal resources and the N channel measurement resource pairs; and obtaining a CSI report, where an association relationship exists between the CSI report and the M reference signal resources and M interference measurement resources associated with the M reference signal resources, and an association relationship exists between the CSI report and reference signal resources included in the N channel measurement resource pairs and N interference measurement resources associated with the reference signal resources; and
sending the CSI report to the network device.

It should be understood that the apparatus 700 may be further configured to perform other steps and/or operations on the terminal device side in the foregoing embodiments. For brevity, details are not described herein again.

When the apparatus 600 is a network device or a chip in the network device, in a possible implementation, when the processor 701 is configured to invoke an interface to perform the following actions:
sending first configuration information and second configuration information to a terminal device, where the first configuration information is associated with reference signal resource configuration information, the reference signal resource configuration information is used to configure a reference signal resource set and an interference measurement resource set, the reference signal resource set includes K reference signal resources, and the interference measurement resource set includes X interference measurement resources; determining N channel measurement resource pairs, where N is an integer greater than or equal to 1, each channel measurement resource pair includes P reference signal resources, the P reference signal resources included in each channel measurement resource pair all belong to the reference signal resource set, P is an integer greater than or equal to 2, K is an integer greater than or equal to P, X meets X=N+K, the second configuration information indicates M reference signal resources in the K reference signal resources, M is a positive integer less than or equal to K, and a first association relationship exists between the X interference measurement resources included in the interference measurement resource set and the K reference signal resources and the N channel measurement resource pairs, or a second association relationship exists between M+N interference measurement resources in the X interference measurement resources included in the interference measurement resource set and the M reference signal resources and the N channel measurement resource pairs; separately sending reference signals on the K reference signal resources; and receiving a CSI report from the terminal device, where an association relationship exists between the CSI report and the M reference signal resources and M interference measurement resources associated with the M reference signal resources, and an association relationship exists between the CSI report and reference signal resources included in the N channel measurement resource pairs and N interference measurement resources associated with the reference signal resources.

It should be understood that the apparatus 700 may be further configured to perform other steps and/or operations on the network device side in the foregoing embodiments. For brevity, details are not described herein again.

It should be understood that the processor 701 may invoke the interface to perform the foregoing receiving and sending actions. The invoked interface may be a logical interface or a physical interface. This is not limited. Optionally, the physical interface may be implemented by using a transceiver. Optionally, the apparatus 700 further includes a transceiver 703.

Optionally, the apparatus 700 further includes a memory 702. The memory 702 may store program code in the foregoing method embodiment, to facilitate invocation by the processor 701.

Specifically, if the apparatus 700 includes the processor 701, the memory 702, and the transceiver 703, the processor 701, the memory 702, and the transceiver 703 communicate with each other through an internal connection path, to transmit a control signal and/or a data signal. In a possible design, the processor 701, the memory 702, and the transceiver 703 may be implemented by using a chip. The processor 701, the memory 702, and the transceiver 703 may be implemented in a same chip, or may be implemented in different chips. Alternatively, any two of functions are combined and implemented in one chip. The memory 702 may store the program code, and the processor 701 invokes the program code stored in the memory 702, to implement a corresponding function of the apparatus 700.

The method disclosed in embodiments of this application may be applied to a processor or may be implemented by a processor. The processor may be an integrated circuit chip with a signal processing capability. In an implementation process, steps in the foregoing method embodiment may be implemented by using a hardware integrated logical circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, or may be a system on chip (system on chip, SoC), or may be a central processing unit (central processor unit, CPU), or may be a network processor (network processor, NP), or may be a digital signal processing circuit (digital signal processor, DSP), or may be a microcontroller (microcontroller unit, MCU), or may be a programmable controller (programmable logic device, PLD) or another integrated chip. The methods, the steps, and logical block diagrams that are disclosed in embodiments of this application may be implemented or performed. The general-purpose processor may be a microprocessor, or the processor may be any conventional processor or the like. Steps of the methods disclosed with reference to embodiments of this application may be directly executed and accomplished by using a hardware decoding processor, or may be executed and accomplished by using a combination of hardware and software modules in the decoding processor. The software modules may be located in a mature storage medium in the art, for example, a random access memory, a flash memory, a read-only memory, a programmable read-only memory, an electrically erasable programmable memory, or a register. The storage medium is located in the memory, and the processor reads information in the memory and completes the steps in the foregoing method in combination with hardware of the processor.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

It should be understood that in embodiments of this application, numbers "first", "second", and the like are merely used to distinguish between different objects, for example, to distinguish between different parameter information or messages, and do not constitute a limitation on the scope of embodiments of this application. Embodiments of this application are not limited thereto.

It should be further understood that sequence numbers of the foregoing processes do not mean execution sequences in embodiments of this application. The execution sequences of the processes should be determined based on functions and internal logic of the processes. Various numbers or sequence numbers in the foregoing processes are merely for differentiation for ease of description, and shall not constitute any limitation on an implementation process of embodiments of this application.

It should further be understood that the term "and/or" in this specification describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

Unless otherwise specified, an expression used in this application similar to an expression that "an item includes one or more of the following: A, B, and C" usually means that the item may be any one of the following: A; B; C; A and B; A and C; B and C; A, B, and C; A and A; A, A, and A; A, A, and B; A, A, and C; A, B, and B; A, C, and C; B and B; B, B and B; B, B and C; C and C; C, C, and C; and another combination of A, B and C. In the foregoing descriptions, three elements A, B, and C are used as an example to describe an optional case of the item. When an expression is "the item includes at least one of the following: A, B, ..., and X", in other words, more elements are included in the expression, a case to which the item is applicable may also be obtained according to the foregoing rule.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiment. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in a form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The storage medium includes any medium that can store program code, for example, a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A method for reporting a channel state information CSI report, comprising:
receiving first configuration information, wherein the first configuration information is CSI report configuration information, the CSI report configuration information comprises second configuration information, the first configuration information is associated with reference signal resource configuration information, the reference signal resource configuration information is used to configure a reference signal resource set, and the second configuration information indicates whether reference signal resources corresponding to N channel measurement resource pairs are used for CSI measurement based on a single transmission reception point TRP CSI measurement hypothesis, wherein each channel measurement resource pair comprises P reference signal resources, the P reference signal resources comprised in each channel measurement resource pair all belong to the reference signal resource set, P is an integer greater than or equal to 2, and N is a positive integer; and
performing CSI measurement based on the first configuration information.

2. The method according to claim 1, wherein the CSI report configuration information is a radio resource control RRC signaling CSI measurement configuration, or an RRC signaling CSI report configuration.

3. The method according to claim 1 or 2, wherein the reference signal resource is a non-zero power channel state information reference signal NZP CSI-RS resource.

4. The method according to any one of claims 1 to 3, further comprising:
receiving first signaling; and
determining the N channel measurement resource pairs based on the first signaling.

5. The method according to any one of claims 1 to 4, wherein the reference signal resource configuration information is further used to configure an interference measurement resource set.

6. The method according to claim 5, wherein the interference measurement resource is a channel state information-interference measurement CSI-IM resource.

7. A method for reporting a channel state information CSI report, comprising:
determining first configuration information, wherein the first configuration information is CSI report configuration information, the CSI report configuration information comprises second configuration information, the first configuration information is associated with reference signal resource configuration information, the reference signal resource configuration information is used to configure a reference signal resource set, and the second configuration information indicates whether reference signal resources corresponding to N channel measurement resource pairs are used for CSI measurement based on a single transmission reception point TRP CSI measurement hypothesis, wherein each channel measurement resource pair comprises P reference signal resources, the P reference signal resources comprised in each channel measurement resource pair all belong to the reference signal resource set, and P is an integer greater than or equal to 2; and
sending the first configuration information.

8. The method according to claim 7, wherein the CSI report configuration information is an RRC signaling CSI measurement configuration, or an RRC signaling CSI report configuration.

9. The method according to claim 7 or 8, wherein the reference signal resource is an NZP CSI-RS resource.

10. The method according to any one of claims 7 to 9, further comprising:
sending first signaling, wherein the first signaling is used to determine the N channel measurement resource pairs.

11. The method according to any one of claims 7 to 10, wherein the reference signal resource configuration information is further used to configure an interference measurement resource set.

12. The method according to claim 11, wherein the interference measurement resource is a CSI-IM resource.

13. An apparatus for reporting a channel state information CSI report, comprising a transceiver unit and a processing unit, wherein
the transceiver unit is configured to receive first configuration information, wherein the first configuration information is CSI report configuration information, the CSI report configuration information comprises second configuration information, the first configuration information is associated with reference signal resource configuration information, the reference signal resource configuration information is used to configure a reference signal resource set, and the second configuration information indicates whether reference signal resources corresponding to N channel measurement resource pairs are used for CSI measurement based on a single transmission reception point TRP CSI measurement hypothesis, wherein each channel measurement resource pair comprises P reference signal resources, the P reference signal resources comprised in each channel measurement resource pair all belong to the reference signal resource set, P is an integer greater than or equal to 2, and N is a positive integer; and
the processing unit is configured to perform CSI measurement based on the first configuration information.

14. The apparatus according to claim 13, wherein the CSI report configuration information is an RRC signaling CSI measurement configuration, or an RRC signaling CSI report configuration.

15. The apparatus according to claim 13 or 14, wherein the reference signal resource is an NZP CSI-RS resource.

16. The apparatus according to any one of claims 13 to 15, wherein the transceiver unit is configured to receive first signaling; and
the processing unit is configured to determine the N channel measurement resource pairs based on the first signaling.

17. The apparatus according to any one of claims 13 to 16, wherein the reference signal resource configuration information is further used to configure an interference measurement resource set.

18. The apparatus according to claim 17, wherein the interference measurement resource is a CSI-IM resource.

19. An apparatus for reporting a channel state information CSI report, comprising a processing unit and a transceiver unit, wherein
the processing unit is configured to determine first configuration information, wherein the first configuration information is CSI report configuration information, the CSI report configuration information comprises second configuration information, the first configuration information is associated with reference signal resource configuration information, the reference signal resource configuration information is used to configure a reference signal resource set, and the second configuration information indicates whether reference signal resources corresponding to N channel measurement resource pairs are used for CSI measurement based on a single transmission reception point TRP CSI measurement hypothesis, wherein each channel measurement resource pair comprises P reference signal resources, the P reference signal resources comprised in each channel measurement resource pair all belong to the reference signal resource set, and P is an integer greater than or equal to 2; and
the transceiver unit is configured to send the first configuration information.

20. The apparatus according to claim 19, wherein the CSI report configuration information is an RRC signaling CSI measurement configuration, or an RRC signaling CSI report configuration.

21. The apparatus according to claim 19 or 20, wherein the reference signal resource is an NZP CSI-RS resource.

22. The apparatus according to any one of claims 19 to 21, wherein the sending unit is configured to send first signaling, and the first signaling is used to determine the N channel measurement resource pairs.

23. The apparatus according to any one of claims 19 to 22, wherein the reference signal resource configuration information is further used to configure an interference measurement resource set.

24. The apparatus according to claim 23, wherein the interference measurement resource is a CSI-IM resource.

25. A communication apparatus, comprising a processor and an interface circuit, wherein the interface circuit is configured to receive a signal from a communication apparatus other than the communication apparatus and transmit the signal to the processor, or send a signal from the processor to a communication apparatus other than the communication apparatus, and the processor is configured to implement the method according to any one of claims 1 to 12 through a logic circuit or by executing code instructions.

26. A computer-readable storage medium, wherein the storage medium stores computer programs or instructions; and when the computer programs or the instructions are executed by a communication apparatus, the method according to any one of claims 1 to 12 is implemented.
